Europäisches Patentamt

(19) European Patent Office

Office européen des brevets

(11) Publication number: **0 130 325**
**B1**

## (12) EUROPEAN PATENT SPECIFICATION

(45) Date of publication of patent specification: **02.03.88**

(21) Application number: **84105464.6**

(22) Date of filing: **14.05.84**

(51) Int. Cl.⁴: **G 01 T 1/20**, G 01 T 1/164, G 02 F 1/133

(54) **Light pipe scintillation crystal assembly of a radiation detector.**

(30) Priority: **24.05.83 US 497486**

(43) Date of publication of application:
**09.01.85 Bulletin 85/02**

(45) Publication of the grant of the patent:
**02.03.88 Bulletin 88/09**

(84) Designated Contracting States:
**DE FR NL**

(56) References cited:
**FR-A-2 446 491**
**GB-A-2 049 973**
**US-A-3 072 973**

**JAPANESE JOURNAL OF APPLIED PHYSICS,
vol. 10, no. 11, November 1971, pages 1597-
1600, Tokyo, JP; S. FUKUI et al.: "Flexible
adiabatic light guide of silicon rubber"**

(73) Proprietor: **Siemens Aktiengesellschaft Berlin
und München
Wittelsbacherplatz 2
D-8000 München 2 (DE)**

(72) Inventor: **Haas, Werner J., Dr.
Ringstrasse 34
D-8521 Uttenreuth (DE)**
Inventor: **Stoub, Everett W., Dr.
719 West Terrace
Villa Park Illinois 60181 (US)**

## Description

### Background of the Invention

#### 1. Field of the Invention

This invention relates to a radiation detector, which comprises a light pipe for a scintillation crystal assembly. A preferred field of application of the invention is in a scintillation gamma camera as radiation detector, which comprises a plurality of photomultiplier tubes connected with the light pipe as part of a scintillation crystal assembly.

#### 2. Description of the Prior Art

Conventional light pipes, such as described for example in the U.S. Patent 3,723,735 (Spelha et al.) or U.S. Patent 4,029,964 (Ashe) consist of an acrylic plastic, such as plexi-glass®. The light pipe is sculptured by means of circular grooves into pads and interstices. The grooves have to be cut into the body of the light pipe. The photomultiplier tubes are coupled to the pads by means of a semi-fluid grease-like silicone compound. To hold the photomultiplier tubes in their position requires them to be spring biased.

Also the radiation detector of the U.S. Patent 3,784,819 (Martone et al.) makes use of a light pipe of an acrylic plastic. The process of fabricating a conventional light pipe out of a piece of acrylic plastic by means of cutting the sculpture is relatively complicated and expensive.

The Japanese Journal of Applied Physics, Vol. 10, No. 11, November 1971, pages 1597—1600 illustrates an adiabatic light guide for scintillation counters, said light guide being made of a silicone rubber. To fix the silicone rubber light guide on the scintillator and on the photo-tube a silicone sealing cement is used, which is different from the silicone rubber which the light guide is made of. Under the circumstances optical matching between light guide and photo-tube is not optimal.

### Summary of the Invention

#### 1. Objects

It is an object of this invention to provide an improved radiation detector including a light pipe for a scintillation crystal assembly wherein said light pipe provides for a better optical matching.

#### 2. Summary

According to this invention a radiation detector is provided which comprises

a) a scintillation crystal assembly having a light pipe: and

b) at least one photomultiplier tube bonded by means of an adhesive on the light pipe, which adhesive after the curing is elastic and light transparent;

wherein the light pipe is formed of the same adhesive as the bond between light pipe and photomultiplier tube.

According to this invention a radiation detector including a light pipe has been created which light pipe can very easily be fabricated in its final shape by casting. Cutting of grooves is no longer necessary. Also the light pipe is of the same material as the bond between light pipe and photomultiplier tubes. Thus the light pipe provides for an excellent optical matching between scintillation crystal and photomultiplier tubes.

Similar matter is claimed in the divisional application published as EP—A—0 221 503.

The foregoing and other objects, features and advantages of the invention will be apparent from the following more particular description of preferred embodiments of the invention, as illustrated in the accompanying drawings.

### Brief Description of the Drawings

In the drawings:

Fig. 1 shows a top view of a scintillation crystal assembly in a detector head, such as a scintillation gamma camera, comprising a light pipe according to this invention;

Fig. 2 shows the scintillation crystal assembly of Fig. 1 in a cross section; and

Fig. 3 shows in a cross section a casting-mold for the light pipe.

### Detailed Description of the Preferred Embodiment

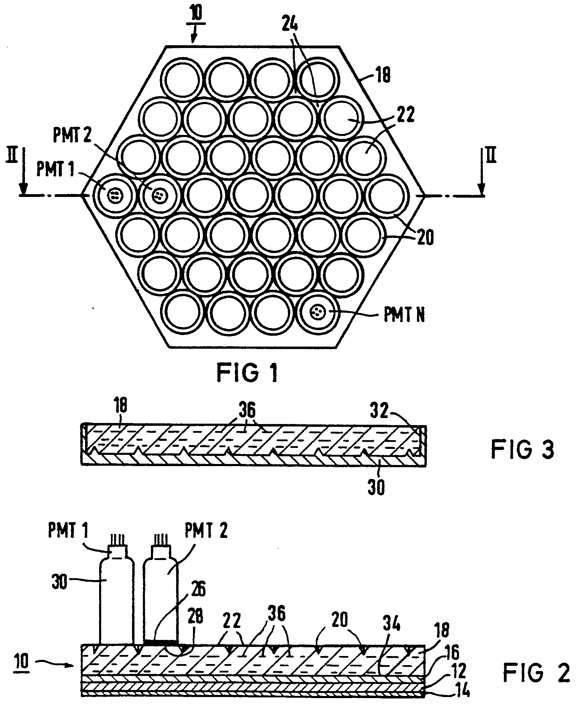

In Figs. 1 and 2 the scintillation crystal assembly 10, which has hexagonal shape, comprises a scintillation crystal 12 (e.g. NaI(T1), an aluminum cover 14, a glass disc 16 and a light pipe 18. The body of the light pipe 18 is sculptured by means of circular grooves 20 into (e.g. 37) circular pads 22 and interstices 24. On each pad 22 a photomultiplier tube PMT1 to PMTN has to be placed. Thus a detector head (e.g. gamma camera head) will be created, which comprises for example a total of N = 37 photomultiplier tubes. Merely three (of e.g. N = 37) photomultiplier tubes are shown in Figs. 1 and 2 for illustrating purpose.

Each photomultiplier tube PMT1 to PMTN has a bottom 26 and is bonded with its bottom 26 to a corresponding pad 22 by means of an elastic light transparent silicone rubber compound. The silicone rubber compound has a transmission of greater than 0.8 through 1 cm at 400 nm wavelengths and a moderate refractive index from about 1.4 to 1.6, at 400 nm. Such a silicone rubber adhesive is available for example from General Electric Company, Silicone Products Division, RTV Products Department, Waterford, New York 12188 under the name RTV 615 or RTV 655 (see General Electric's brochure CDS-1870A "RTV Silicone Rubber Product Data RTV 615, RTV 655 and RTV 670, High Strength Transparent Silicone Rubber Compound"). Other usable silicone rubber adhesives are for example the Sylgard® Silicone Elastomers 182 or 184 available from the Dow Corning Corporation, Midland, Michigan 48640 (see page 22 of Dow Corning's brochure "Materials for High Technology Applications"). In the present case RTV 615 of General Electric is used as adhesive. The silicone rubber bond is indicated with the numeral 28.

According to this invention also the light pipe 18 has been formed of the same elastic light transparent silicone rubber compound, for example RTV 615 of General Electric, as has been used for bonding the bottoms 26 of the photomultiplier tubes PMT1 to PMTN to the light pipe 18.

Preferably the light pipe 18 as shaped according to Figs. 1 and 2 has been produced in one piece by casting. This is for example indicated in Fig. 3.

Fig. 3 shows in a cross section a casting-mold 30, which is the sculpture negative of the light pipe 18 of Figs. 1 and 2.

As described in the brochure Product Data CDS-1870A of General Electric ten parts of the A compound and one part of the B compound have previously been mixed and stirred in a container such as to produce a homogeneous mixture free of air bubbles. The mixture is then cast into the interior volume 32 of the casting-mold 30. After the curing the light pipe 18 can be removed from the casting-mold 30 and bonded to the glass disc 16 of the scintillation crystal assembly 10 preferably also by means of the silicone rubber adhesive RTV 615.

After having bonded the photomultiplier tubes PMT1 to PMTN to the pads 22, the light pipe 18 and both the silicone rubber bond 28 between photomultiplier tubes and light pipe and the silicone rubber bond 34 between light pipe and glass disc 16 form an optically uniform unit. This unit provides an excellent optical matching with respect to the scintillation flashes travelling from the scintillation crystal 12 via glass disc 16 to the photomultiplier tubes PMT1 to PMTN.

According to a preferred embodiment of this invention masking elements, such as dots or rings of reflective or absorptive material, are embedded in the body of the light pipe 18, as indicated in Figs. 2 and 3 by the reference numeral 36. The masking elements modify the distribution of the scintillation light so that an improvement in camera performance is achieved. The masking elements 36 have been applied to the silicone rubber compound mixture, during the casting of the light pipe 18. Thereby the casting-mold has been filled to a prescribed depth with the silicone rubber compound. After the curing of this layer of silicone rubber compound the appropriate pattern of mask material, by silk-screen inking of the surface of the cured silicone rubber compound for example, has been applied. These steps have been repeated until the full pattern of masking elements has been applied and the light pipe is formed with its final depth.

## Claims

1. A radiation detector comprising:
a) a scintillation crystal assembly (10) having a light pipe (18); and
b) at least one photomultiplier tube (PMT1 to PMT N) bonded by means of an adhesive on the light pipe, which adhesive after the curing is elastic and light transparent;
characterized in that the light pipe (18) is formed of the same adhesive as the bond (28) between the light pipe and photomultiplier tube.

2. A radiation detector according to claim 1, wherein the scintillation crystal assembly (10) further comprises a glass disc (16) covering the scintillation crystal (12) of the scintillation crystal assembly, wherein the light pipe (18) is bonded (34) with the glass disc by the same adhesive of which the light pipe has been formed.

3. A radiation detector according to claim 1 or 2, wherein the light pipe (18) comprises embedded masking elements (36) for modifying the distribution of scintillation light.

4. A radiation detector according to one of the preceding claims 1 to 3, wherein the adhesive is a silicone rubber compound.

## Patentansprüche

1. Strahlungsdetektor mit:
a) einer Szintillationskristallanordnung (10), die einen Lichtleiter (18) umfaßt; und
b) wenigstens einer Fotovervielfacherröhre (PMT 1 bis PMT N), die mittels eines Klebers, der nach dem Aushärten elastisch und lichtdurchlässig ist, an den Lichtleiter geklebt ist;
dadurch gekennzeichnet, daß der Lichtleiter (18) aus dem gleichen Kleber besteht, wie die Verbindung (28) zwischen dem Lichtleiter und der Fotovervielfacherröhre.

2. Strahlungsdetektor nach Anspruch 1, wobei die Szintillationskristallanordnung (10) außerdem eine Glasscheibe (16) umfaßt, die den Szintillationskristall (12) der Szintillationskristallanordnung abdeckt, wobei der Lichtleiter (18) mittels des gleichen Klebers, aus dem der Lichtleiter besteht, mit der Glasscheibe verbunden ist.

3. Strahlungsdetektor nach Anspruch 1 oder 2, wobei der Lichtleiter (18) eingebettete Abdeckungselemente (36) zur Modifikation der Szintillationslichtverteilung umfaßt.

4. Strahlungsdetektor nach einem der Ansprüche 1 bis 3, wobei der Kleber ein Silikon-Kautschuk-Gemisch ist.

## Revendications

1. Un détecteur de rayonnement comprenant:
a) une structure de cristal scintillateur (10) comportant un guide de lumière (18);
b) au moins un tube photomultiplicateur (PMT1 à PMTN), fixé par un adhésif au guide de lumière, cet adhésif étant élastique et transparent à la lumière, après durchissement;
caractérisé en ce que le guide de lumière (18) est formé par le même adhésif que la liaison (28) entre le guide de lumière et le tube photomultiplicateur.

2. Un détecteur de rayonnement selon la revendication 1, dans lequel la structure de cristal scintillateur (10) comprend en outre un disque de verre (16) qui recouvre le cristal scintillateur (12) de la structure de cristal scintillateur, et dans lequel le guide de lumière (18) est fixé (34) au disque de verre par un adhésif identique à celui avec lequel on a formé le guide de lumière.

3. Un détecteur de rayonnement selon la revendication 1 ou 2, dans lequel le guide de lumière (18) comprend des éléments de masquage (36) noyés à l'intérieur du guide dans le but de modifier la répartition de la lumière de scintillation.

4. Un détecteur de rayonnement selon l'une quelconque des revendications 1 à 3 précédentes, dans lequel l'adhésif est un composé consistant en caoutchouc aux silicones.

FIG 1

FIG 3

FIG 2